# EUROPEAN PATENT APPLICATION

(11) **EP 1 134 302 A1**
(43) Date of publication of application: **19.09.2001**
(21) Application number: 00105673.8
(22) Date of filing: 17.03.2000
(51) Int. Cl.: C23C 4/08, C01B 13/18

(54) **New process for the production of nanostructured solid powders and nano-particles films by compartimentalised solution thermal spraying (CSTS)**

(71) Applicant: Consorzio Interuniversitario per lo Sviluppo dei Sistemi a Grande Interfase, C.S.G.I, 50121 Firenze (IT)
(72) Inventor: Baglioni, Piero, 50014 Fiesole (Province of Firenze) (IT); Bardi, Ugo, 50014 Fiesole (Province of Firenze) (IT); Bonini, Massimo, 52028 Terranuova Braccini (IT)
(74) Representative: Gervasi, Gemma, Dr.

(57) **Abstract**

The present invention describes a process for producing nano-structured solid powders wherein water/oil, oil/water and bicontinuous dispersions comprising that material are used as feeding material in thermal straying techniques and also a new process for deposing solid sprayed nano-structured coatings onto a substrate, in which the coating materials are fed in the form of water/oil, oil/water or bicontinuous dispersion, micelles, microemulsions or emulsions.

## Description

### Field of the invention

The present invention relates to a process for producing nano-structured solid powders wherein water/oil, oil/water and bicontinuous dispersions comprising that material are used as feeding material in thermal straying techniques.

The present invention concerns further a new process for deposing solid sprayed nano-structured coatings onto a substrate, in which the coating materials are fed in the form of water/oil, oil/water or bicontinuous dispersion, micelles, microemulsions or emulsions.

### State of the art

Nano-structured materials (or simply "nanomaterials"), normally in the form of powders or thin-films, have unique mechanical, optical, and magnetic properties, thus being of considerable industrial importance which makes very desirable the possibility of obtaining them in good quantity.

Among the possible use of the above defined nanomaterials it is particularly interesting the possibility of using such materials for producing thin films on solid surfaces. Such films can be obtained - in principle - by several techniques, in particular controlling the nucleation from the gas phase. This control is however possible only in particular conditions and in any case is not easy to obtain.

A more direct process consists in the high temperature spraying of nano sized powders onto the surface in conditions such that the individual grains do not melt upon impacting the substrate. This is the process commonly known as "thermal spray" process, which, however, does not normally permit to use grain sizes lower than about 10 µm because of the difficulty in handling and flowing powders having smaller grain size.

This difficulty has led to the development of processes where liquid solutions are used to feed spray-coating systems where, in principle, it is possible to obtain a smaller grain size, as described in the European patent No. EP 777 759.

Although promising, these processes have obtained so far limited practical success as industrial coating or deposition processes due to a number of problems. Specifically, when a liquid solution is sprayed onto a substrate, the only way to control the grain size of the resulting deposit is to control the droplet size, which is a difficult and delicate task. Furthermore, droplets undergo complex phenomena of disintegration and aggregation in the flame, which are also difficult to control, it comes without saying that the above described processes, a part from their limited efficiency for producing thin films, are absolutely inadequate for producing nanomaterials in industrially interesting quantities.

In view of the above said it is clear the importance to make available a process for the production of nanomaterials and for producing thin films coatings on solid surfaces.

### Summary of the invention

The present invention allows the overcoming of the above discussed problems connected with grain size control by a novel process in which a nano-compartmentalised solution of the wanted material is used as feed material for thermal spray.

According to the process of the invention it is possible to produce nanomaterials in great quantity and to obtain, if desired, thin coatings film with great efficiency.

### Detailed description of the invention

According to the process of the present invention nano-structured powers and or nano-particles films are prepared by thermal spraying techniques wherein nano-compartmentalised solutions of the wanted material are used as feeding product.

The process according to the invention can be applied to all the existing thermal spraying techniques as: flame spraying, plasma spraying, arc spraying, detonation gun spraying, high velocity oxy-fuel spraying etc.

According to the invention the nano-compartmentalised solutions can be dispersion, emulsions, microemulsions or sol-gel systems; more particularly they are water/oil, oil/water and bicontinuous dispersions stabilised by surfactants in which the continuous phase is in the form of droplets droplets having a size comprised between 150 Angstroms and 1 micron.

More preferably the nano-compartmentalised solution according to the invention are microemulsion wherein the droplets have a size comprised between 100 and 1500 Angstroms.

The nano-compartmentalised solution of a given material are prepared by mixing a microemulsion of the metallic salt of the material with microemulsion of a suitable reducing agent in order to form a colloidal suspension of material nanoclusters.

The oil phase of the above said nano-compartmentalised solutions is selected from a group consisting of almost every organic solvent, for example: alkanes, alkenes, cyclo-alkanes, aromatic compounds, alcohols, and ketones.

The surfactants used for stabilising the dispersion are the commonly used stabilising agent for microemulsions (excluded the surfactants containing metals) as anionic, cationic, zwitterionic or non-ionic surfactants, polymer or copolymers, for example: alkyl sulfates, alkylaryl sulfonates, alkylarylether carboxilates, alkylarylether carboxylates, alkylether sulfates, alkylether carboxylates, lignin products, amides, amines, diamines, amine salts, imidazolines, quaternaries amines, Nonionics: alkoxylates, alcohol ethoxylates, amide ethoxylates, alkyloamides, ester ethoxylates, block polymers, etc.

Also co-surfactants commonly used for stabilising microemulsions can be obviously added if required for the wanted purposes, example of possible co-surfactants are: poly-alkylarylsulfonates, alcohols (propanol, iso-propanol, butanol, iso-butanol, penthanol, etch.), alcohol ethoxylates, etch.

According to the present invention, the material selected for producing the wanted nano-structured powder is dissolved in the dispersed phase and the dissolved ions are then precipitated by addition of a suitable reducing agent. Operating as here above described the size of the precipitated particles ranges from a few nanometers to 200 or even more nanometers, as observed by Light Scattering experiments. The solution containing metallic nanoclusters is then sprayed by whatever thermal spraying technique.

It's very important to underline that any substance that can be dissolved in water or in an organic solvent can be prepared in the form of nano-compartmentalised solutions and then used as feed material for a commonly used liquid thermal spraying equipment. For example, metallic materials in the form of pure metals, oxides, sulphides and other ionic compounds can be used in the present process. The nano-structured coatings prepared according to the present invention may be obtained by means of any thermal spraying equipment.

Moreover, as above said, this process allows production of large quantities of nanomaterials that are not easily obtained from available processes. In fact, a commonly used process to synthesise nanoclusters is in microemulsion, but with this process up to now the separation process from the surfactant constituting the micelles has been very difficult and even after a long procedure of separation the quantity of powders obtained was too small to have industrial relevance.

The following examples are given to provide non-limiting illustrations of the present invention. In particular we describe the synthesis of gold coated films by using w/o microemulsions.

### EXAMPLE 1

Preparation of a gold nanostructured film by flame spraying of a w/o microemulsion characterised by a w₀=2.22 and prepared using Brij 30® in hexane.

Preparation of the nano-compartmentalised solution

Gold nanoparticles were prepared by simply mixing two w/o microemulsions: one containing tetrachloroauric acid and the other containing hydrazine hydroxide, both dissolved in the aqueous phase.

Microemulsions containing the metallic salt have been prepared by adding a 1M aqueous solution of HAuCl₄3H₂O to a 0.2M solution of the Brij 30® in hexane. The temperature has been kept at 25°C. The formed solution was mixed with a vortex, resulting in a stable microemulsion. The concentration of gold was always of the order of 10⁻³ M. Water have been added to microemulsions to obtain the desired value of w₀=2.22.

A similar microemulsion containing the reducing agent have been prepared by adding an aqueous solution of hydrazine hydroxide to a 0.2M solution of the surfactant (Brij 30® ) in hexane. The concentration of hydrazine was at least 10 times bigger than that of gold. In fact, using stoichiometric quantities takes to a slow precipitation of gold clusters.

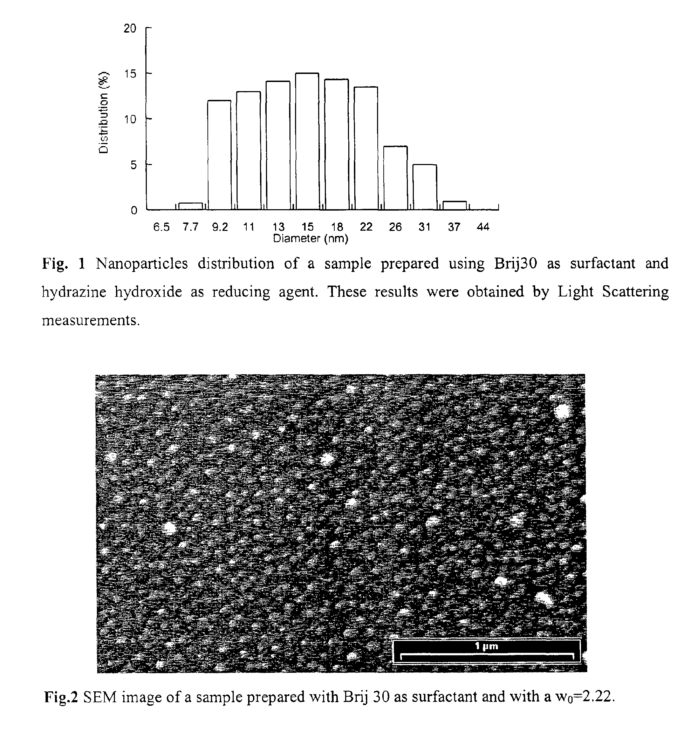

By mixing the two microemulsions, we obtain a colloidal suspension of gold nanoclusters. The reaction is practically immediate. Once the reduction is complete, the colloidal suspension is deep red coloured, typical of the formation of gold nanoclusters. On this colloidal suspension Light Scattering experiments has been conducted. The histogram of the particle distribution is shown in fig. 1.

### Thermal spraying

The spraying set-up used during this experiment has been built so that it is possible to spray the emulsions directly into an air-acetylene flame and in the form of an aerosol. In fact the emulsion is extracted from a container by Venturi effect using a mixture of acetylene and compressed air.

In the thermal spraying equipment we used in this experiment there is a simple propane / butane flame reaching a temperature of about 1200 °C. The aerosol is fed into the flame from a nearly parallel direction to the flame direction. The path of the sprayed droplets into the flame should be long enough to cause the complete combustion of the carrier gas as well as of the surfactant. At the same time, the water nano-droplets must evaporate completely in the flame leaving only the nano-particles to be deposed, in order to reach the substrate surface. If the reactant combustion or water evaporation were incomplete, the result would be a "wet" poorly adherent film on the substrate surface. The right conditions in terms of angle, gas flux and distance flame-substrate were therefore accurately determined by trial and error tests by the Applicant.

During the nanoparticles depositions the pressure of the air-acetylene mixture was about 1.5 bar, while the air/ acetylene ratio was about 1. In these conditions the flame temperature was 1000-1200°C. Length of the flame was about 30 cm. Nanoparticles were sprayed upon silicon wafers (about 1x1 cm).

During the spraying process, samples were kept at a distance of about 15 cm. from the flame. Every single deposition has been made using about 25 ml of emulsion, changing the value of w₀, but keeping constant the oil/surfactant ratio: 5cc hexane: 0.362 g Brij 30, 5cc hexane: 0.217 g ammonium laurate. Gold concentration was always of the order of 10⁻³ M (concentration is expressed as moles of metallic salt over total emulsion volume ratio).

### Film characterisation

To a visual inspection, the films obtained according to the present invention appear transparent when deposited on glass and of colours similar to the colour of the solution used, normally light pink. This result is a qualitative indication that the size distribution of the particles does not change radically upon flaming and deposition.

Simple sellotape® tests were also performed on these films observing a good adherence. Examination of the films by optical microscopy revealed no detectable structure within the instrument resolution.

The nano-structure of the film has been evidenced by Scanning Electron Microscopy (SEM) and Atomic Force Microscopy (AFM). SEM images used by the applicant are obtained with a JEOL 5600 and with a Philips 514, while AFM images are obtained with a Topometrix TMX 2000 Explorer in contact mode. The Applicant has made measurements in non-contact mode too obtaining exactly the same results.

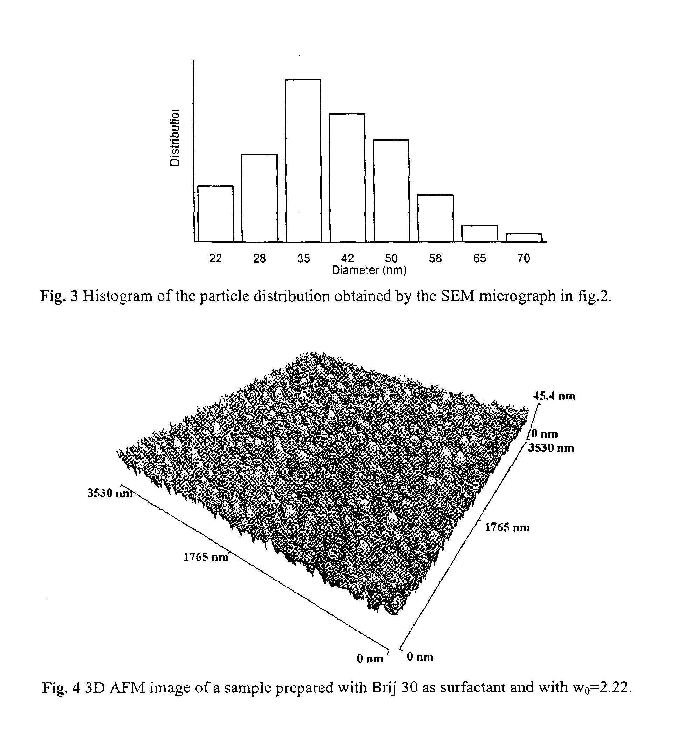

Comparative SEM measurements on silicon substrates that were subjected to spraying in the same conditions, but without gold, showed no features comparable to the ones detected in fig. 2, so that we can conclude that the high features are actually gold particles. Moreover their diameter is of the expected size, that is of the order of 30 nm.

A histogram of the particle distribution, deduced by the SEM image, is shown in fig. 3; the distribution of the particles in the film does not substantially differ from that of the solution.

The AFM results were similar to the SEM ones, although with AFM we could obtain a better resolution. AFM results for a silicon substrate coated with the microemulsion with w₀=2.22 and stabilised by Brij 30 as surfactant are shown in fig. 4. We performed comparative tests on samples which were sprayed without gold in the solution as well, and the results clearly showed that the particles are clearly the sprayed ones, and not due to the roughness of the substrate. In this case, the gold film has an estimated thickness of approximately 5 µm and it covers completely the substrate leaving no detectable gaps.

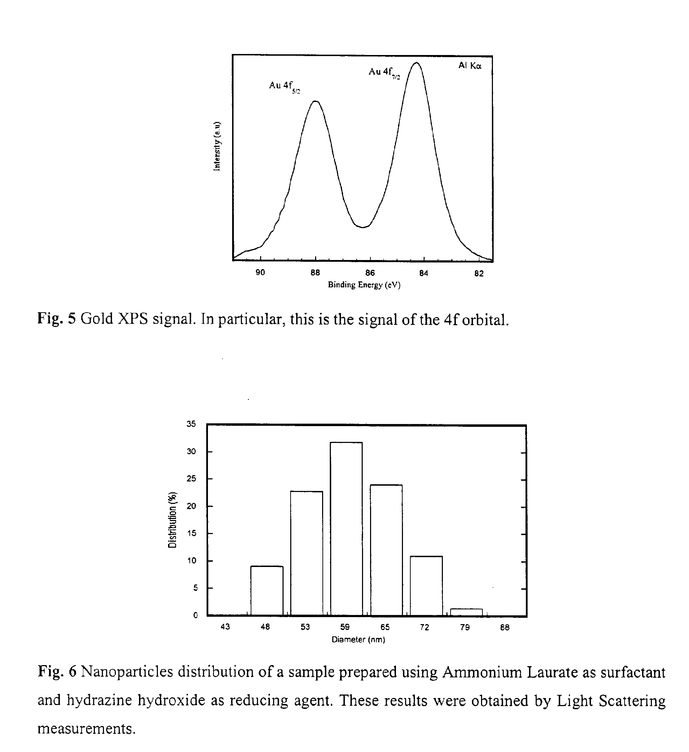

Further characterisation of the deposit was obtained by X-rays photoelectron spectroscopy. Results are shown in fig. 5. The gold signal is clearly detectable.

### EXAMPLE 2

Preparation of a gold nano-structured film by flame spraying of a w/o microemulsion characterised by a w₀=4.82 and prepared using Ammonium Laurate in octane.

### Preparation of the nano-compartmentalised solution

Synthesis of gold nanoparticles has been made exactly in the same way of example 1, except for the solvent choice and the temperature. Microemulsions containing the metallic salt have been prepared by adding a 1M aqueous solution of HAuCl₄^{·}3H₂O to a 0.2M solution of Ammonium Laurate in octane. The temperature has been kept at 30°C. The formed solution was mixed with a vortex, resulting in a stable microemulsion. The concentration of gold was always of the order of 10⁻³ M. Water have been added to the microemulsions to obtain the desired value of w₀=4.82.

A similar microemulsion containing the reducing agent have been prepared by adding an aqueous solution of hydrazine hydroxide to a 0.2M solution of the surfactant (Ammonium Laurate) in octane. The concentration of hydrazine was at least 10 times bigger than that of gold. In fact, using stoichiometric quantities takes to a slow precipitation of gold clusters.

By mixing the two microemulsions, we obtain a colloidal suspension of gold nanoclusters. The reaction takes about an hour. Once the reduction is complete, the colloidal suspension is deep red coloured, typical of the formation of gold nanoclusters.

The thermal spraying was performed as described in Example 1.

### Film characterisation

The gold film obtained as described before has been tested with sellotape® revealing a good adherence. The nano-structure of the film has been evidenced again by Scanning Electron Microscopy (SEM) and Atomic Force Microscopy (AFM), using the same instruments of the first example.

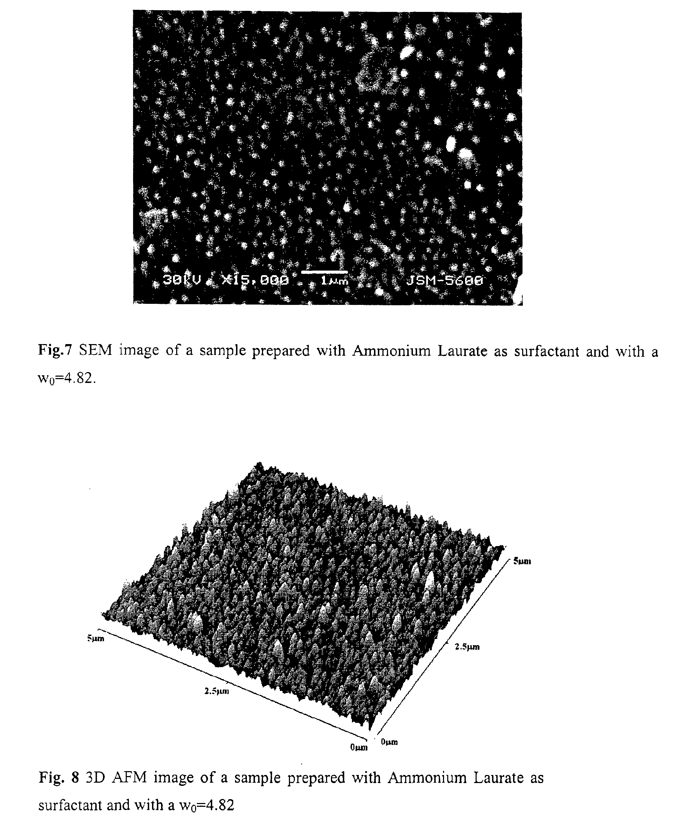

Again, comparative SEM measurements on silicon substrates that were subjected to spraying in the same conditions, but without gold, showed no features comparable to the ones detected in fig. 7 and fig.2, so that we can conclude that the high features are actually gold particles. Moreover their diameter is of the expected size, that is of the order of 60 nm.

AFM results for a silicon substrate coated with the microemulsion with w₀=4.82 and stabilised by Ammonium Laurate as surfactant are shown in fig. 8. We performed comparative tests on samples which were sprayed without gold in the solution as well, and the results clearly showed that the particles are clearly the sprayed ones, and not due to the roughness of the substrate. In this case too, the gold film has an estimated thickness of approximately 5 µm and it covers completely the substrate leaving no detectable gaps.

Further characterisation of the deposit was obtained by X-rays photoelectron spectroscopy. Results are identical of example 1.

## Claims

1. Process for the preparation of nano-structured powders or nano-particles films by thermal spraying techniques wherein a nano-compartmentalised solution of a metallic material is used as feed material.

2. Process according to claims 1 wherein the nano-compartmentalised solution is a dispersion, emulsion, microemulsion or sol-gel system.

3. Process according to claim 2 wherein the nano-compartmentalised dispersion consists of water/oil, oil/water or a bicontinuous dispersions stabilised by surfactants in which the non continuous phase is in the form of droplets having a size comprised between 150 Angstroms and 1 micron containing the wanted metallic material.

4. Process according to Claim 3 wherein the nano-compartmentalised dispersion is a microemulsion wherein the droplets size is comprised between 100 and 1500 Angstroms.

5. Process according to claim 4 wherein the oil phase of the nano-compartmentalised dispersion is an organic solvent.

6. Process according to Claim 4 wherein the metallic material is a metallic substance capable of being dissolved in water or in organic solvent.

7. Process according to Claim 6 wherein the metallic substances is chosen in the group consisting of: pure metals, metal alloys, oxides, sulphides, ionic compounds.

8. Process according to Claim 1 wherein the thermal spray technique used is flame spraying, plasma spraying, arc spraying, detonation gun spraying, high velocity oxy-fuel spraying.

9. Process for the preparation of nano-compartmentalised solution wherein the material selected for producing a wanted nano-structured powder is dissolved in the dispersed phase and the dissolved ions are then precipitated by addition of a suitable reducing agent.

10. Process according to claim 9 wherein a microemulsion of the metallic salt of the material is mixed with a microemulsion of a suitable reducing agent in order to form a colloidal suspension of material nanoclusters.

11. Process for deposing nano-particles films by thermal spraying techniques wherein nano-compartmentalised solutions of the wanted material, according to claim 1, are used as feeding product.

12. Nano-particles films obtained by thermal spraying techniques wherein nano-compartmentalised solutions of the wanted material, according to claim 1, are used as feeding product.

13. Use of nano-compartmentalised solutions of metallic materials as feed material in thermal spraying techniques.
